# EUROPEAN PATENT APPLICATION

(11) **EP 2 597 011 A1**
(43) Date of publication of application: **29.05.2013**
(21) Application number: 11190765.5
(22) Date of filing: 25.11.2011
(51) Int. Cl.: B62B 3/18, B62B 5/00

(54) **Nesting roll container, buffer element therefor, and method of transporting a plurality nesting roll containers in a queue formation**

(71) Applicant: K. Hartwall Oy AB, 01150 Söderkulla (FI)
(72) Inventor: Grönholm, Jack, 01150 Söderkulla (FI)
(74) Representative: Arvela, Sakari Mikael

(57) **Abstract**

The present invention to provides for securing the contents of a nesting two-sided roll container (100) without increasing labor-intensity or packaging waste while making use of the nesting efficiency of the roll container (100) in return logistics. The invention relates to a novel buffer element (200) for a nesting roll container (100a), wherein the buffer element (200) comprises an engaging portion (203) which is adapted to be attached to the chassis (140) of the roll container (100a) such that the buffer element (200) is configured to be retrofitted. The buffer element (200) also comprises a distancing portion (201) which protrudes from the engaging portion (203) such that the distancing portion (201) is adapted to make contact with a subsequent nesting roll container (100b).

## Description

### Field of the invention

The present invention relates to logistics equipment. Particularly, the invention relates to nesting roll containers having an A- or H-frame chassis.

### Background art

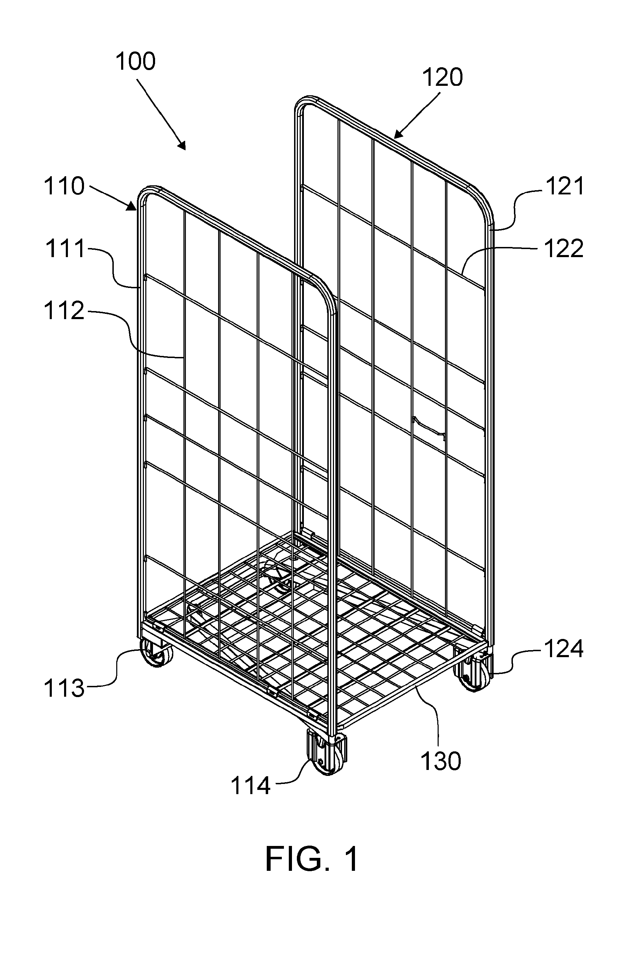

Roll containers are a popular means of moving and temporary storage of goods. Roll containers comprise a chassis, which is fitted with fixed or swivel castors or both, and typically at least two opposing vertical side wall sections. There is a variety of different types of roll containers, but a nesting type has achieved great popularity. A particularly popular type of a nesting roll container is the so called A-frame roll container, which has an A-shaped chassis in plan view. The A-frame chassis (shown in Fig. 1) comprises a main beam extending longitudinally from a fixed rear castor forward to the front of the roll container, wherein the beam is angled to extend transversally between the front castors and further angled to extend longitudinally rearward to the other rear castor. The longitudinally extending portions of the main beam are connected with a cross-bar, wherein the chassis resembles the letter A. Also so called H-frame roll containers are known, the chassis of which comprises two separate longitudinal main beams being connected with a cross-bar, wherein the chassis resembles the letter H.

Most roll containers also comprise a liftable floor, which is hinged so that the floor can be in a horizontal position, wherein it is able to receive and provide support for the contents of the container, or in a vertical position, wherein it is folded parallel to a side wall section for accommodating efficient nesting. The rest of the roll container is prepared for nesting by pivoting the front ends of the side wall sections toward while the rear ends act as pivoting points, wherein the side wall sections are parallel to the angled longitudinal main beams of the chassis. When a plurality of nesting roll containers are arranged in a nesting queue formation, the frontal transversal portion of the main beam of a roll container rests against the cross-bar of a previous roll container such that the side wall sections of the subsequent roll container rests against the chassis of the previous roll container.

These known roll containers comprising two side wall sections are light and efficient in return logistics making them a popular means of transporting parceled goods. However, the disadvantage of having only two side wall sections is that there is no support for the contents of the roll container, whereby the contents is likely to drop out from the roll container. One solution for securing large items, such as cardboard boxes, into the roll container is to arrange a strap between the side wall sections. Typically, however, the roll container is used to transport small objects, wherein it is necessary to wrap the roll container in plastic foil for preventing the objects from falling out. Such arrangements are quite labor-intensive and produce excessive packaging waste.

An alternative solution would be retrofitting the roll container with doors, i.e. additional front and rear wall sections. However, such retrofitted wall sections cannot fit between subsequent roll containers in a nesting queue formation. This is due to the standardized dimensions of the roll containers, whereby subsequent roll containers are designed to fit tightly within each other thus leaving no lateral room for add-on doors between fixed wall sections of subsequent roll containers. Should a two-sided roll container be equipped with add-on doors, they would have to be transported in normal load-carrying formation. Therefore the efficiency of the two-sided nesting roll container would be lost in return logistics. On the other hand, it would not be possible to force said containers into conventional nesting queue formation for transport because the containers would wedge into one another causing the chassis is to be under excess strain which results in the chassis be being warped. Said wedging may also cause damage to the add-on doors or hinges as well.

### Aim of the invention

It is therefore an aim of the present invention to provide a solution for the above-described problem of securing the contents of the roll container without increasing labor-intensity or packaging waste while making use of the nesting efficiency of the two-sided roll container in return logistics.

The aim of the invention is achieved with a novel buffer element for a nesting roll container, wherein the buffer element comprises an engaging portion which is adapted to be attached to the chassis of the roll container such that the buffer element is configured to be retrofitted. The buffer element also comprises a distancing portion which protrudes from the engaging portion such that the distancing portion is adapted to make contact with a subsequent nesting roll container.

More specifically, the buffer element according to the present invention is characterized by claim 1.

On the other hand the aim is achieved with a nesting roll container comprising two opposing fixed wall sections and a chassis connecting the wall sections and having at least two portions of a main beam connected by a cross-bar, wherein the chassis is equipped with a buffer element for providing lateral clearance for retrofit wall sections attached pivotably to the fixed wall sections of the roll container.

More specifically, the nesting roll container according to the present invention is characterized by the characterizing portion of claim 13.

The aim is also achieved with a novel method of transporting a plurality nesting roll containers in a queue formation, wherein the chassis of at least one roll container in the queue is provided with a buffer element of claim 1 for providing lateral clearance for retrofit wall sections attached pivotably to the fixed wall sections of the roll container.

More specifically, the method according to the present invention is characterized by the characterizing portion of claim 15.

### Benefits

Considerable benefits are gained with aid of the present invention. The possibility to use retro-fit doors secures the contents to the roll container, wherein also small parceled goods may be transported. While nesting depth is decreased by the added buffer element, the nesting efficiency is still utilized in transporting empty roll containers. Such an arrangement is substantially more efficient compared to traditional four-sided roll containers, for example.

According to one embodiment, the buffer element is made of elastic material, such as rubber or similar, wherein the noise produced by roll containers in nesting queue formation is significantly reduced.

According to one embodiment, the terminal ends of the buffer element are chamfered or rounded or similarly lightened, wherein a line contact between the cross-bar of a subsequent roll container and the buffer element of the previous roll container is created thus distributing load evenly and avoiding point-form load previously caused by contact between front terminal edges of the side wall sections of a subsequent roll container and the cross-bar of the chassis of a previous roll container.

### Brief description of drawings

In the following embodiments of the invention are described with reference to the accompanying drawings, in which:
Fig. 1 presents an isometric view of an A-frame roll container according to the prior art,
Fig. 2 presents an isometric view of the roll container of Fig. 1 equipped with additional doors and a buffer element according to one embodiment,
Fig. 3 presents a top elevation view of the roll container of Fig. 2 without the floor panel for improved legibility,
Fig. 4 presents an isolated view of the A-frame of Fig. 2 provided with the buffer element,
Fig. 5 presents an isolated view of the buffer element of Fig. 2,
Fig. 6 presents an isometric view of the roll container of Fig. 2 arranged into a nesting position,
Fig. 7 presents an isometric view of two roll containers of Fig. 6 arranged into a nesting position,
Fig. 8 presents a top elevation view of the roll containers of Fig. 7, and
Fig. 9 presents a detailed cross-section view of the engagement between the subsequent roll containers of Fig. 7.

### Detailed description of preferred embodiments

As seen from Fig. 1, a conventional roll container 100 comprises two opposing fixed side wall sections 110, 120 both comprising a frame 111, 121 and a mesh 112, 122 provided to the frame 111, 121. The side wall sections 110, 120 also comprise a front castor 113, 123, which is a swivel castor, and a rear castor 114, 124 which is a fixed castor. The roll container 100 further comprises a floor 130 which is hinged to the second side wall section 120 such that it may be pivoted into a vertical position, wherein it is folded parallel to the second side wall section 120 for accommodating efficient nesting.

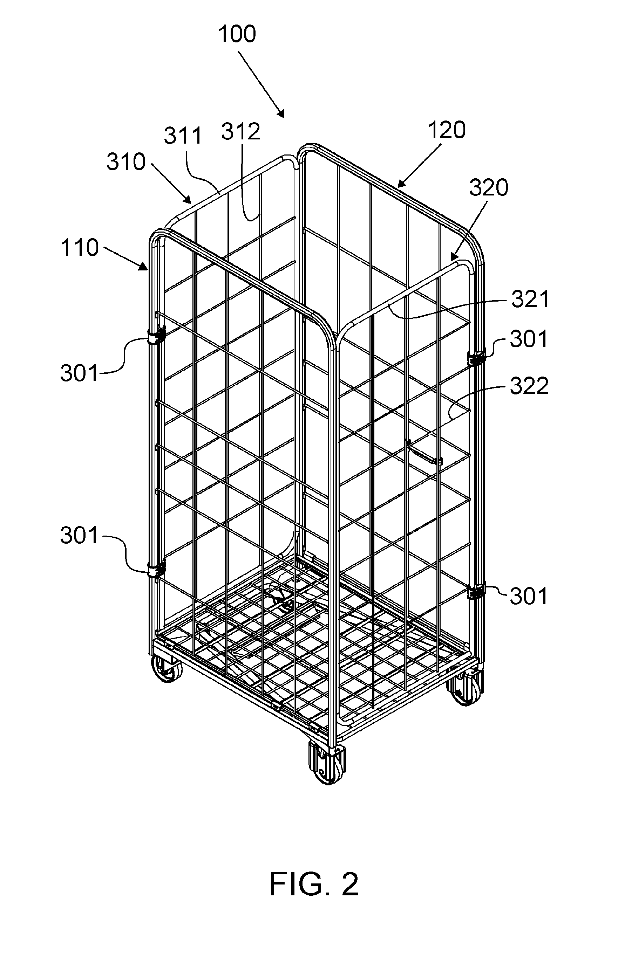

By virtue of the novel buffer element, a conventional roll container of Fig. 1 may be equipped with add-on doors 310, 320 as shown in Fig. 2. The add-on doors 310, 320 comprise a similar frame 311, 321 and a mesh 312, 322 as the side wall sections 110, 120. The add-on doors 310, 320 are in other words additional wall sections which are pivotally arranged to the fixed side wall sections 110, 120. In the embodiment of Fig. 2, a first add-on door 310 is pivotally attached to the front edge of the frame 111 of first side wall section 110 via two superposed hinges 301 for creating a front door. A second add-on door 320 is pivotally attached to the front edge of the frame 121 of second side wall section 120 via two similar superposed hinges 301 for creating a rear door. With the add-on doors 310, 320 attached, a conventional two-sided roll container 100 is turned into a four-sided roll container which may be opened or closed at the front, back or from both directions. The doors 310, 320 may also be attached by using other fastening means known in the field.

Alternatively, the add-on doors may be lighter securing means (not shown), such as soft fabric doors or tarpaulins for closing one side of the roll container. The lateral clearance provided by the invention is advantageous also for lighter securing means as the extra space between fixed wall sections prevent the, soft fabric door, tarpaulin or similar from being subjected to mechanical wear and tear during transport in a nesting queue formation.

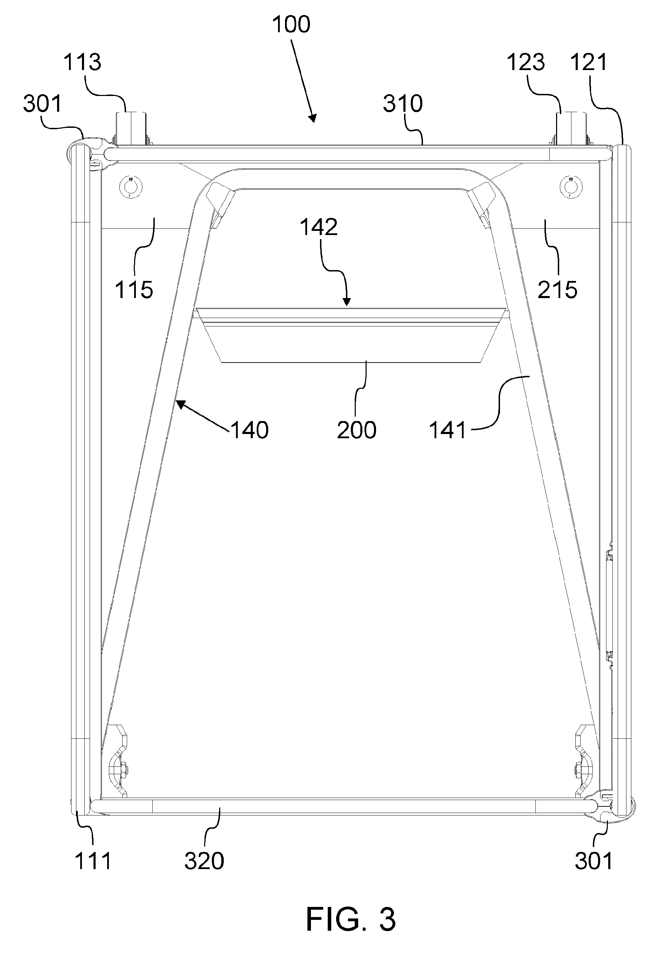

Referring now to Fig. 3 which illustrates the equipped roll container of Fig. 2 viewed from above without the floor 130 for improved legibility. From Fig. 3 it may be seen that the hinges 301 are preferably snap-on elements made of plastic or similar elastic material for noise-reduction. Fig. 3 further shows restrictors 115, 215 provided to the front end of frames 111, 121 of the side wall sections 110, 120, which restrictors 115, 215 engage with the chassis 140 and restrict the angular movement of the side wall sections 110, 120 in respect to the chassis 140. Fig. 3 illustrates an embodiment featuring an A-frame chassis 140 comprising a main beam 141 and a cross-bar 142 arranged to transversally connect the opposing longitudinal portions of the main beam 141. Also visible is a buffer element 200 which is provided to the cross-bar 142.

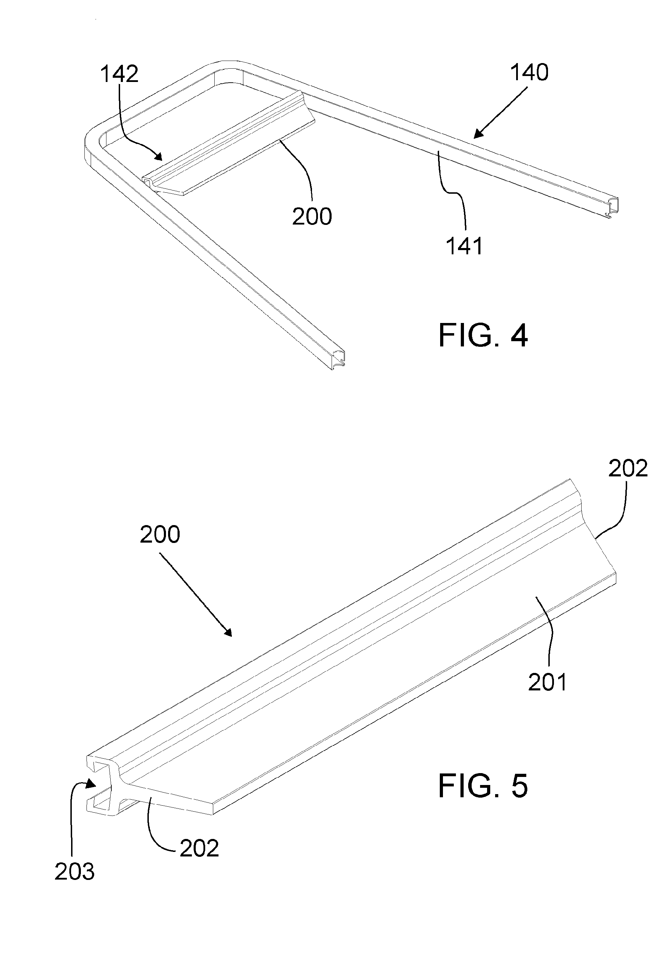

As shown in greater detail in Figs. 4 and 5 and according to one embodiment, the buffer element 200 is attached to the cross-bar 142 through a form-fitting engagement. Accordingly, the buffer element 200 comprises an engaging portion 203 which is adapted to be attached to the chassis 140 of the roll container 100 such that the buffer element 200 is configured to be retrofitted. In the embodiment shown in the Figures, the engaging portion 203 is an open profile designed to at least partially enclose the cross-bar 142 of an A-frame chassis 140 such that the buffer element 200 may be snapped onto the cross-bar 142, wherein no tools are needed for assembly. Alternatively, the buffer element 200 may be attached by using other fastening means known in the art, such as screw coupling or adhesives (not shown). Instead of the cross-bar 142, the buffer element 200 may alternatively or additionally be attached to the main beam 141 (not shown). Furthermore, the engaging portion 203 may alternatively be adapted to be attached to a chassis, particularly cross-bar, of another type of roll container, such as an H-frame roll container (not shown). However, form-fitting attachment to the cross-bar 142 is preferred.

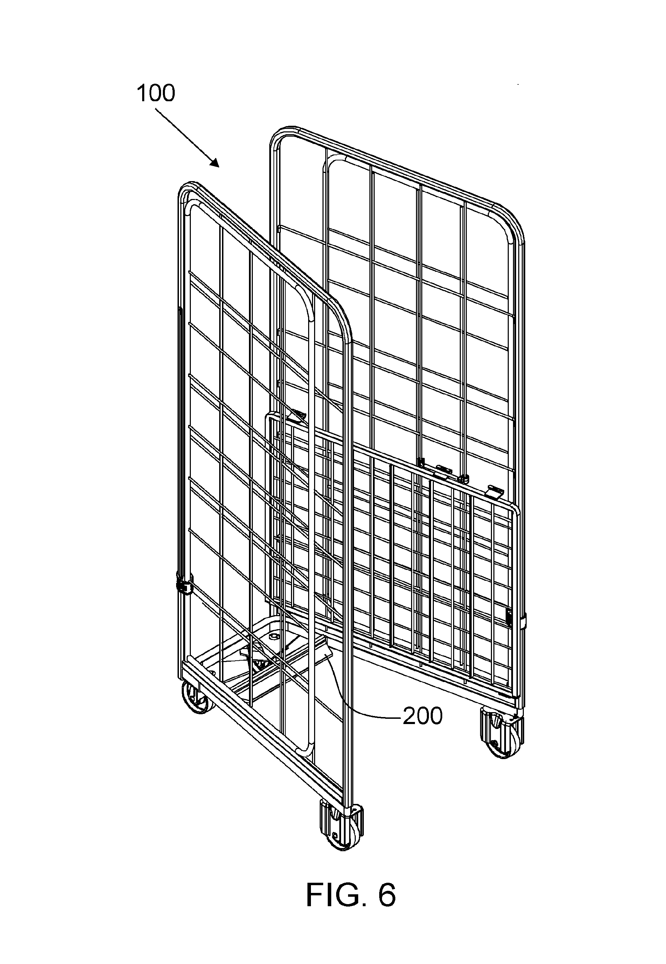

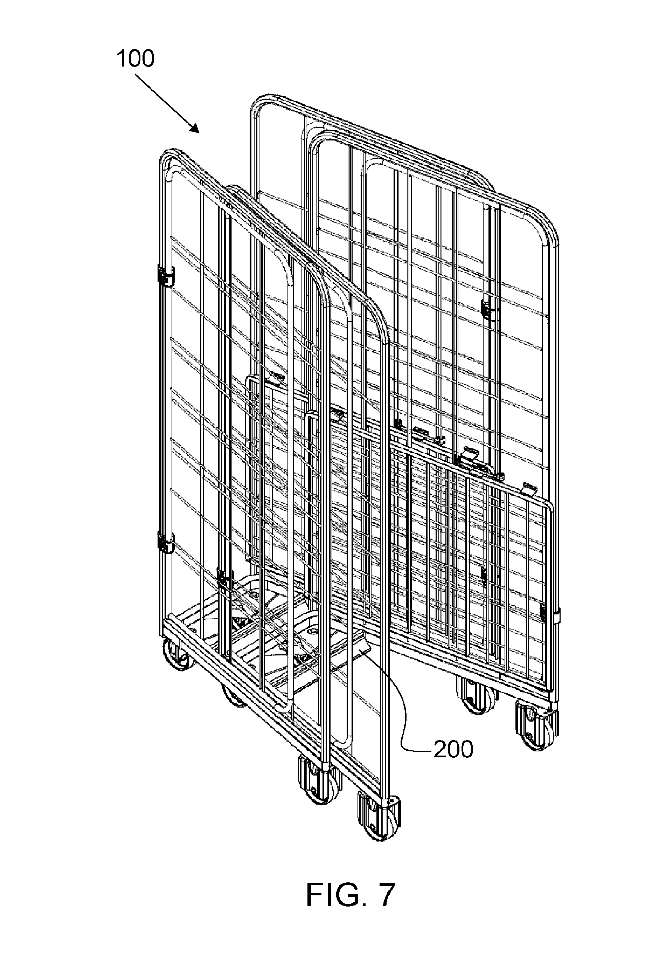

As is also visible from Figs. 4 and 5, the buffer element 200 comprises a distancing portion 201 which protrudes from the engaging portion 203 and extends rear ward. The distancing portion 201 is adapted to make contact with a subsequent nesting roll container. Accordingly, the protrusion extent of the engaging portion 201 is dimensioned such that the nesting depth, i.e. nesting overlap, of two nesting containers in queue formation is reduced for providing adequate clearance for add-on doors. The dimensioning principle is shown more clearly in Figs. 6 to 8 showing different angles of nesting roll containers. The buffer element 200 is advantageously extruded from elastic material, such as HDPE or PVC, for noise reduction, wherein the elastic buffer element 200 dampens noise caused by two metallic nesting roll containers 100a, 100b making contact while pushing a roll container queue along.

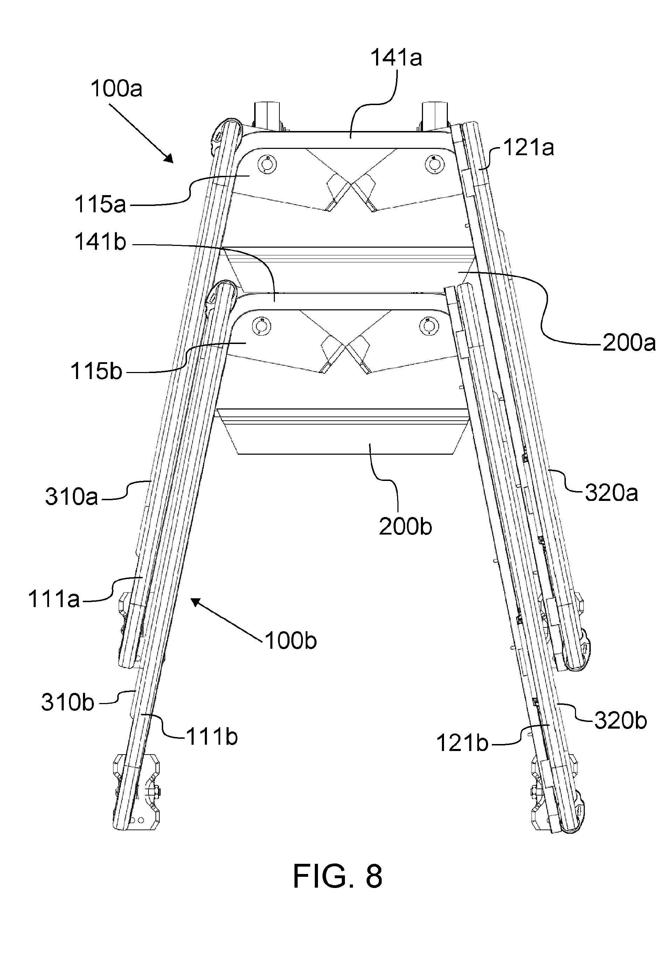

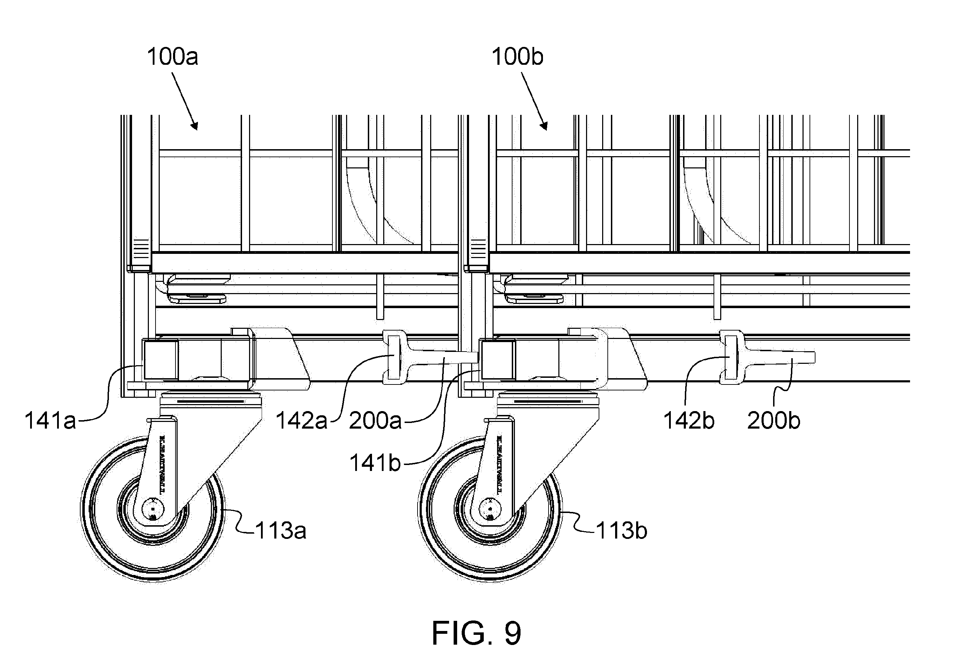

Referring now to Fig. 8, where it is illustrated how two nesting roll containers 100a, 100b are arranged sequentially and how the buffer element 200a of a previous roll container 100a engages with the front portion of the main beam 141b of the subsequent roll container 100b. Fig. 8 specifically illustrates how the longitudinal protrusion of the distancing portion 201 of the buffer element 200a of a previous roll container 100a provides also lateral clearance for add-on doors 310b, 320b which are flanked parallel to the side wall sections 110b, 120b of a subsequent roll container 100b. The engagement of the buffer element 200 of Figs. 2 to 8 on the one hand with the cross-bar 142a of a previous roll container 100a and on the other hand with the front transversal portion of the main beam 141b of the subsequent roll container 100b is presented in greater detail in Fig. 9.

Referring now to Figs. 4, 5, 8 and 9 which show a particularly preferable embodiment, wherein the contact edge of the distancing portion 201 of the buffer element 200, i.e. the terminal edge thereof, is shorter than the engaging portion 203. In the embodiment shown in the Figures the lateral ends of the buffer element 200 are chamfered, wherein a gap is produced between the distancing portion 201 and the neighboring main beam 141. Instead of a chamfer a similar effect is achieved with a rounding or such lightening form. Resulting from such an advantageous shape, a line contact is established between the cross-bar 142b of a subsequent roll container 100b and the buffer element 200 of the previous roll container 100a. As can be seen, there is space for the front edge of the wall sections 110, 120, add-on doors 310, 320 as well as hinges 301 in said gap. Furthermore it is seen that the main beam 141b of the subsequent roll container 100b is engaged along a lengthy contact line with the buffer element 200a of the previous roll container 100a.

The dimensions of the buffer element 200 are selected according to the size of the roll container 100 and the required lateral space for additional securing means located between the wall sections of subsequent roll containers. In the example of Fig. 8 let us assume that the width of a standard size roll container 100a, 100b is 664 mm, whereby the length is 800 mm. A typical queue advance for such a roll container would be about 190 mm. Wider roll containers having the width of 704 mm and a similar length are also known, wherein the queue advance is about 150 mm. In order to establish a sufficient amount of lateral space for a nesting roll container having the length of 800 mm, the queue advance is increased, i.e. nesting depth reduced, by about 40 mm. The length of the distancing portion 201 of the buffer element 200 should therefore be at least 40 mm.

However, if the buffer element 200 is chamfered as shown in Fig. 5, the front end of the fixed wall sections 111b, 121b of the subsequent roll container 100b penetrate to the chamfer gap of the previous roll container 100a, whereby the frontal portion of the main beam 141b of the subsequent roll container 100b engages with the rear edge of the buffer element 200a of the previous roll container 100a as shown in Fig. 8. Due to this embedding, the distancing portion 201 is dimensioned to provide an increase of 54 mm to the queue advance. While the required queue advance is only 40 mm, the longitudinal length of the distancing portion 201 is 14 mm longer because the buffer 200 makes contact with the front portion of the chassis 140b of the subsequent roll container 100b, which front portion is located rearward from the front edge of the fixed wall sections 111b, 121b by 14 mm.

Furthermore, if the roll container features an H-frame (not shown), then the front end of the fixed wall sections 111b, 121b of the subsequent roll container 100b may engage directly with the buffer element 200, wherein the length of distancing portion 201 may be 40 mm.

Similar dimensioning principles may be applied to roll containers of other size as well.

**Table 1: List of reference numbers.**

| **Number** | **Part** | **Number** | **Part** |
|---|---|---|---|
| 110 | 1^{st} side wall section | 130 | floor |
| 111 | frame | 140 | chassis |
| 112 | mesh | 141 | main beam |
| 113 | front castor | 142 | cross-bar |
| 114 | rear castor | 200 | buffer element |
| 115 | restrictor | 201 | distancing portion |
| 120 | 2^{nd} side wall section | 202 | chamfer |
| 121 | frame | 203 | engaging portion |
| 122 | mesh | 301 | hinge |
| 123 | front castor | 310 | 1^{st} add-on door |
| 124 | rear castor | 320 | 2^{nd} add-on door |
| 125 | restrictor | | |

## Claims

1. Buffer element (200) for a nesting roll container (100a), the buffer element (200) comprising:
- an engaging portion (203) which is adapted to be attached to the chassis (140) of the roll container (100a) such that the buffer element (200) is configured to be retrofitted,
- a distancing portion (201) protruding from the engaging portion (203) such that the distancing portion (201) is adapted to make contact with a subsequent nesting roll container (100b).

2. Buffer element (200) according to claim 1, wherein the chassis (140) of the roll container (100) comprises a cross-bar (142) to which the engaging portion (203) is adapted to be attached.

3. Buffer element (200) according to claim 2, wherein the distancing portion (201) of a previous roll container (100a) is adapted to make contact with the chassis (140), particularly the frontal portion of the main beam (141b) or cross-bar (142b), of a subsequent nesting roll container (100b).

4. Buffer element (200) according to claim 1, 2 or 4, wherein the engaging portion (203) comprises means for form-fitting attachment to the cross-bar (142) of the roll container chassis (140).

5. Buffer element (200) according to claim 1, 2, 3 or 4, wherein the engaging portion (203) is an open profile designed to at least partially enclose the cross-bar (142).

6. Buffer element (200) according to any of the preceding claims, wherein the engaging portion (203) which is adapted to be attached to the cross-bar (142) of an A-frame chassis (140).

7. Buffer element (200) according to any of claims 1 to 5, wherein the engaging portion (203) which is adapted to be attached to the cross-bar (142) of an H-frame chassis.

8. Buffer element (200) according to any of the preceding claims, wherein the distancing portion (201) is dimensioned to protrude such that the buffer element (200) of a previous roll container (100a) provides lateral clearance for add-on doors (310b, 320b) flanked parallel to the side wall sections (110b, 120b) of a subsequent roll container (100b) when the cross-bar (142b) of the subsequent roll container (100b) engages with the buffer element (200) of the previous roll container (100a).

9. Buffer element (200) according to any of the preceding claims, wherein the buffer element (200) is made of elastic material for noise reduction.

10. Buffer element (200) according to any of the preceding claims, wherein the buffer element (200) is a profile made by extrusion.

11. Buffer element (200) according to any of the preceding claims, wherein the terminal edge of the distancing portion (201) is shorter than the engaging portion (203) for creating a line contact between the chassis (140b) of a subsequent roll container (100b) and the buffer element (200a) of the previous roll container (100a).

12. Buffer element (200) according to claim 11, wherein the terminal ends of the buffer element (200) are chamfered or rounded or similarly lightened for creating an embedding gap for the front end of the fixed wall sections (111b, 121b) of the subsequent roll container (100b).

13. Nesting roll container (100) comprising two opposing fixed wall sections (110, 120) and a chassis (140) connecting the wall sections (110, 120) and having at least two portions of a main beam (141) connected by a cross-bar (142), **characterized by** a buffer element (200) adapted to the chassis (140) for providing lateral clearance for retrofit wall sections (310, 320) attached pivotably to the fixed wall sections (110, 120) of the roll container (100).

14. Nesting roll container (100) according to claim 13, wherein the buffer element (200) is a buffer element according to claim 1, which is attached to the cross-bar (142) of the chassis (140).

15. Method of transporting a plurality nesting roll containers (100) in a queue formation, **characterized in that** the chassis (140) of at least one roll container (100a) in the queue is provided with a buffer element of claim 1 for providing lateral clearance for retrofit wall sections (310, 320) attached pivotably to the fixed wall sections (110, 120) of the roll container (100).
